# EUROPÄISCHE PATENTANMELDUNG

(11) **EP 2 445 089 A2**
(43) Veröffentlichungstag der Anmeldung: **25.04.2012**
(21) Anmeldenummer: 11180570.1
(22) Anmeldetag: 08.09.2011
(51) Int. Cl.: H02K 5/14, H02K 13/10

(54) **Kommutatormotor**

(30) Priorität: 20.10.2010 DE 102010042699
(71) Anmelder: Robert Bosch GmbH, 70469 Stuttgart (DE)
(72) Erfinder: Lauk, Detlef, 77871 Renchen (DE)

(57) **Zusammenfassung**

Bei einem Kommutatormotor mit einem Kommutator (185), der einen an einer Kollektorlauffläche (189) in Schleifkontakt mit zugeordneten Bürsten (187, 197) stehenden Kollektor (183) aufweist, wobei die Bürsten (187, 197) in zugeordneten Bürstenhaltern (287, 297) angeordnet sind, sind die Bürstenhalter (287, 297) dazu ausgebildet, eine Anordnung der Bürsten (187, 197) in einem aus einem Bereich von 72° bis 108° vorgegebenen Bürstenwinkel (250) zu ermöglichen.

## Beschreibung

### Stand der Technik

Die vorliegende Erfindung betrifft einen Kommutatormotor mit einem Kommutator, der einen an einer Kollektorlauffläche in Schleifkontakt mit zugeordneten Bürsten stehenden Kollektor aufweist, wobei die Bürsten in zugeordneten Bürstenhaltern angeordnet sind.

Aus dem Stand der Technik sind derartige Kommutatormotoren bekannt, die zur Kommutierung ausgebildete Kommutatoren aufweisen. Diese haben einen an einer Kollektorlauffläche in Schleifkontakt mit zugeordneten Bürsten stehenden Kollektor, der an einem Rotor des Kommutatormotors vorgesehen ist. Über die in zugeordneten Bürstenhaltern in einem vorgegebenen Bürstenwinkel relativ zueinander angeordneten Bürsten, z. B. Kohlebürsten, und den Kollektor wird dem Kommutatormotor ein zum Betrieb erforderlicher Motorstrom zugeführt. Bei der Kommutierung derartiger Kommutatormotoren entstehen sogenannte "Stromrippel", die zur Bestimmung einer jeweiligen Drehstellung des Rotors verwendbar sind.

Nachteilig am Stand der Technik ist, dass die Bürstenhalter als rechteckige Kohleköcher mit vergleichsweise großen Toleranzen einer zugeordneten elektrischen Bürstenüberdeckung von Kohlebürste zu Kollektor ausgebildet sind, sodass ein durch die Kommutierung entstehendes Stromrippelsignal lediglich eine eingeschränkte Robustheit aufweist. Diese eingeschränkte Robustheit wird darüber hinaus im Verlauf der Lebensdauer der Kohlebürsten weiter reduziert, sodass ein jeweils im Betrieb des Kommutatormotors entstehendes Stromrippelsignal nur eingeschränkt zur präzisen Drehstellungsbestimmung des Rotors verwendbar ist.

### Offenbarung der Erfindung

Eine Aufgabe der Erfindung ist es daher, einen neuen Kommutatormotor bereit zu stellen, bei dem eine Erzeugung eines robusten Stromrippelsignals ermöglicht wird.

Dieses Problem wird gelöst durch einen Kommutatormotor mit einem Kommutator, der einen an einer Kollektorlauffläche in Schleifkontakt mit zugeordneten Bürsten stehenden Kollektor aufweist. Die Bürsten sind in zugeordneten Bürstenhaltern angeordnet. Die Bürstenhalter sind dazu ausgebildet, eine Anordnung der Bürsten in einem aus einem Bereich von 72° bis 108° vorgegebenen Bürstenwinkel zu ermöglichen.

Die Erfindung ermöglicht somit die Bereitstellung eines Kommutatormotors, bei dem im Betrieb eine Erzeugung eines Mindest-Stromrippelsignals, das zur sicheren und präzisen Drehstellungsbestimmung für einen zugeordneten Rotor geeignet ist, gewährleistet ist.

Der Bürstenwinkel ist bevorzugt nicht kleiner als 76° und nicht größer als 82°.

Somit können Stabilität und Robustheit des Stromrippelsignals weiter verbessert werden.

Gemäß einer Ausführungsform beträgt der Bürstenwinkel 79°.

Somit kann die Erzeugung eines in Bezug auf Geräuschentwicklung, Motorleistung und Abstrahlung von elektromagnetischen Störstrahlungen durch den Kommutatormotor im Wesentlichen optimierten Stromrippelsignals ermöglicht werden.

Der Kommutator ist einem Rotor zugeordnet, der bevorzugt einen vierpoligen Statorkern aufweist.

Die Erfindung ermöglicht somit die Erzeugung eines stabilen und robusten Stromrippelsignals für einen vierpoligen Kommutatormotor.

Der Rotorkern ist bevorzugt zehnnutig ausgebildet.

Die Erfindung ermöglicht somit die Erzeugung eines stabilen und robusten Stromrippelsignals für einen zehnnutigen Kommutatormotor.

Gemäß einer Ausführungsform ist der Bürstenwinkel vorgegeben, um eine Entstehung von zur Positionserfassung des Rotors geeigneten Kommutierungsstromrippeln zu ermöglichen.

Somit kann auf einfache Art und Weise eine präzise Bestimmung einer Drehstellung des Rotors im Betrieb des Kommutatormotors ermöglicht werden.

Der Kollektor weist bevorzugt eine Vielzahl von Lamellen auf, deren Anzahl ungleich einem ganzzahligen Vielfachen von 4 ist.

Somit kann eine Erzeugung eines zuverlässigen und robusten Stromrippelsignals für eine Vielzahl unterschiedlich ausgelegter Kommutatormotoren ermöglicht werden.

Die Bürsten weisen jeweils eine Bürstenbreite auf, die bevorzugt im Bereich von 1,8 mm bis 3,0 mm liegt.

Somit kann bei einer Vielzahl unterschiedlich breiter Bürsten eine Erzeugung eines zuverlässigen und robusten Stromrippelsignals ermöglicht werden.

Gemäß einer Ausführungsform sind die Bürstenhalter an einem zugeordneten Spritzgussteil ausgebildet.

Die Erfindung ermöglicht somit die Bereitstellung eines stabilen und kostengünstigen Spritzgussteils, an dem die Bürstenhalter mit reduzierten Toleranzen ausgebildet werden können.

Gemäß einer Ausführungsform weist mindestens ein Bürstenhalter in Richtung seiner Längserstreckung einen mindestens fünfeckigen Querschnitt auf.

Die Erfindung ermöglicht somit auf einfache Art und Weise eine im Wesentlichen spielfreie Führung der Bürsten in den Bürstenhaltern.

Der mindestens fünfeckige Querschnitt des mindestens einen Bürstenhalters ist bevorzugt in Häuschenform ausgebildet.

Somit kann eine verbesserte und robustere Führung der Bürsten in den Bürstenhaltern erreicht werden.

An dem mindestens einen Bürstenhalter ist bevorzugt mindestens ein Halteglied vorgesehen, das dazu ausgebildet ist, ein Ausrutschen der zugeordneten Bürste in einer Richtung quer zur Richtung der Längserstreckung des Bürstenhalters zu verhindern.

Somit kann ein unerwünschtes Ausrutschen der Bürste aus dem Bürstenhalter zuverlässig und sicher verhindert werden.

Gemäß einer Ausführungsform ist dem mindestens einen Bürstenhalter mindestens eine Kohleanpressfeder zur Beaufschlagung der zugeordneten Bürste mit einer ersten vorgegebenen Federkraft in Richtung des Kollektors zugeordnet.

Die Erfindung ermöglicht somit die Bereitstellung einer sowohl im Neuzustand als auch über die Lebensdauer der Bürste im Wesentlichen konstanten Bürstenvorschubkraft und somit eines im Wesentlichen konstanten Bürstenanpressdrucks am Kollektor.

Der Kollektor weist bevorzugt eine Vielzahl von Lamellen auf, deren Anzahl ungleich einem ganzzahligen Vielfachen von 4 ist, wobei die Kohleanpressfeder dazu ausgebildet ist, die zugeordnete Bürste mit der ersten vorgegebenen Federkraft in Richtung der Lamellen zu beaufschlagen.

Somit kann die Kohleanpressfeder auf einfache Art und Weise bei einer Vielzahl unterschiedlich ausgestalteter Kommutatormotoren Anwendung finden.

Die mindestens eine Kohleanpressfeder ist bevorzugt zum Niederhalten der zugeordneten Bürste mit einer zweiten vorgegebenen Federkraft in dem mindestens einen Bürstenhalter ausgebildet.

Somit kann ein Ausrutschen der Bürste aus dem Bürstenhalter auf einfache Art und Weise verhindert werden.

Gemäß einer Ausführungsform ist die mindestens eine Kohleanpressfeder einstückig ausgebildet und weist einen ersten Federarm zur Beaufschlagung der zugeordneten Bürste mit der ersten vorgegebenen Federkraft und einen zweiten Federarm zur Beaufschlagung der zugeordneten Bürste mit der zweiten vorgegebenen Federkraft auf.

Die Erfindung ermöglicht somit die Bereitstellung eines stabilen und kostengünstigen Bauteils zur Realisierung der Kohleanpressfeder.

Die zugeordnete Bürste weist bevorzugt einen um einen vorgegebenen Winkel abgeschrägten Endbereich auf, der von dem ersten Federarm mit der ersten vorgegebenen Federkraft beaufschlagt ist.

Somit kann die Federkraft des ersten Federarms auf einfache Art und Weise sowohl zur Bereitstellung einer gewünschten Bürstenvorschubkraft, als auch zur Bereitstellung einer Bürstenniederhaltekraftkomponente verwendet werden.

Bevorzugt weist mindestens eine Bürste kohlehaltiges Material auf.

Die Erfindung ermöglicht somit z. B. die Verwendung gebräuchlicher, kostengünstiger Kohlebürsten.

Gemäß einer Ausführungsform sind die Bürstenhalter durch Kunststoffspritzen unter Verwendung eines schieberlosen Spritzgusswerkzeugs an einem Spritzgussteil ausgebildet.

Die Erfindung ermöglicht somit eine vereinfachte Herstellung eines mit Bürstenhaltern versehenen Bauteils.

Gemäß einer Ausführungsform ist mindestens einem Bürstenhalter mindestens eine einstückige Kohleanpressfeder zugeordnet, die einen ersten Federarm zur Beaufschlagung einer zugeordneten Bürste mit einer ersten vorgegebenen Federkraft in Richtung des Kollektors und einen zweiten Federarm zum Niederhalten der zugeordneten Bürste mit einer zweiten vorgegebenen Federkraft in dem mindestens einen Bürstenhalter aufweist.

Die Erfindung ermöglicht somit die Bereitstellung eines Kommutatormotors, bei dem auf einfache Art und Weise einerseits eine im Wesentlichen konstante Bürstenvorschubkraft zum Andrücken der Bürste gegen den Kollektor und andererseits eine im Wesentlichen konstante Niederhaltekraft zur Verhinderung eines Ausrutschens der Bürste aus dem Bürstenhalter erreicht werden können.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht eines Kommutatormotors gemäß einer Ausführungsform,
Fig. 2 eine Draufsicht auf den Kommutator von Fig. 1 und auf ein Spritzgussteil, an dem Bürstenhalter ausgebildet sind, in denen die Kohlebürsten von Fig. 1 angeordnet sind,
Fig. 3 ein Messdiagramm zur Verdeutlichung von Stromrippelsignalen, die bei einer Verwendung von unterschiedlich breiten Kohlebürsten bei dem Kommutatormotor von Fig. 1 erzeugt werden,
Fig. 4 eine perspektivische Ansicht und eine Schnittansicht eines mit einer Kohlebürste versehenen Bürstenhalters von Fig. 2, sowie von Lamellen des Kollektors von Fig. 2, gemäß einer ersten Ausführungsform,
Fig. 5 eine perspektivische Ansicht und eine Schnittansicht eines mit einer Kohlebürste versehenen Bürstenhalters von Fig. 2 gemäß einer zweiten Ausführungsform, sowie einer Kohlefeder gemäß einer ersten Ausführungsform,
Fig. 6 eine perspektivische Ansicht einer Kohlefeder gemäß einer zweiten Ausführungsform,
Fig. 7 eine Seitenansicht einer Kohlebürste gemäß einer weiteren Ausführungsform mit einer Kohlefeder gemäß einer dritten Ausführungsform, und
Fig. 8 eine perspektivische Ansicht einer Kohlefeder gemäß einer vierten Ausführungsform.

### Beschreibung der Ausführungsbeispiele

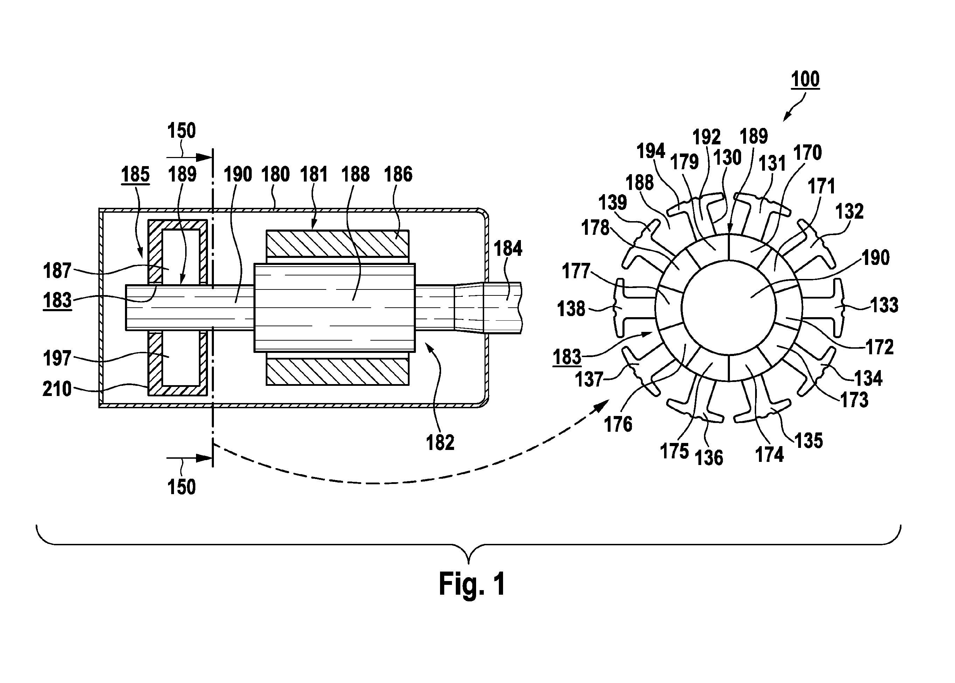

Fig. 1 zeigt einen mit Stator- und Rotorkomponenten 181 bzw. 182 versehenen Kommutatormotor 100 mit einer Motorwelle 184 gemäß einer Ausführungsform, der illustrativ in einem Motorgehäuse 180 angeordnet ist und z. B. als Antriebsmotor für einen elektrischen Fensterheber, beispielsweise in einem Kraftfahrzeug, Anwendung finden kann. Die Statorkomponenten 181 weisen beispielhaft Permanentmagneten 186 auf und die Rotorkomponenten 182 beispielhaft einen Rotor- bzw. Eisenkern 188.

Der Kommutatormotor 100 weist zur Kommutierung einen Kommutator 185 mit einem vorgegebenen Kommutatordurchmesser auf und kann derart steuer- bzw. regelbar sein, dass sowohl ein Reversierbetrieb, als auch Vorgaben hinsichtlich einer gewünschten Drehgeschwindigkeit realisierbar sind. Die Funktionsweise und der Aufbau eines geeigneten Kommutatormotors sind aus dem Stand der Technik hinreichend bekannt, sodass hier zwecks Knappheit der Beschreibung auf eine eingehende Beschreibung verzichtet wird.

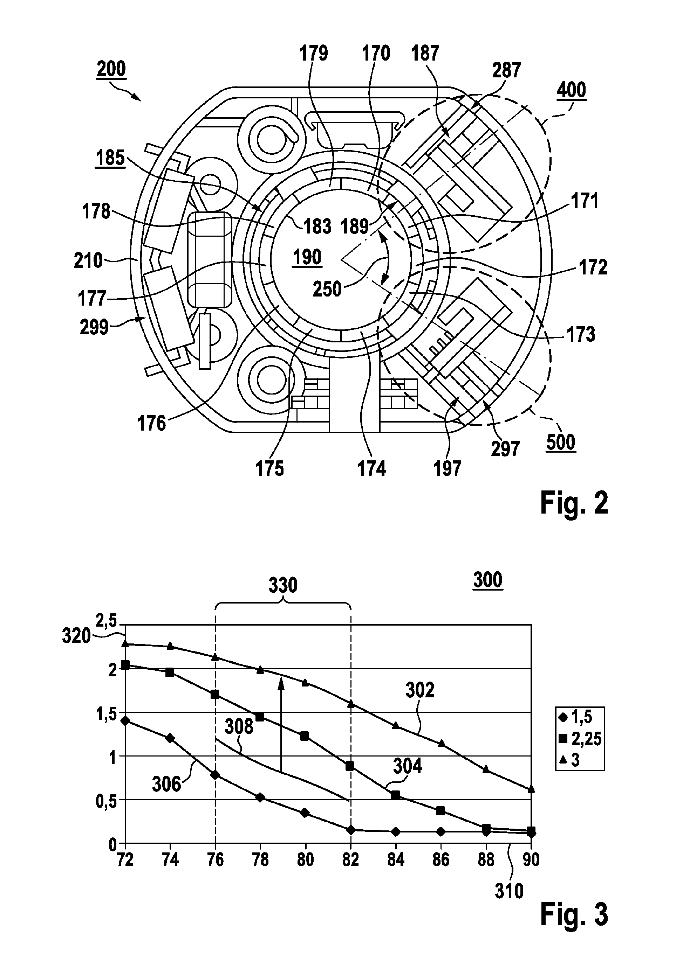

Illustrativ umfasst der Kommutator 185 einen Kollektor 183, der an einer zugeordneten Kollektorlauffläche 189 mit zwei oder mehr Bürsten 187, 197 einen Schleifkontakt herstellt, sodass dem Motor 100 im Betrieb über die Bürsten 187, 197 und den Kollektor 183 ein geeigneter Motorstrom zugeführt werden kann. Gemäß einer Ausführungsform weist mindestens eine der Bürsten 187, 197 kohlehaltiges Material auf und ist z. B. nach Art einer Kohlebürste ausgebildet. Die Kohlebürsten 187, 197 sind in zugeordneten Bürstenhaltern (287, 297 in Fig. 2) angeordnet, die illustrativ an einem bevorzugt einstückigen Spritzgussteil 210 ausgebildet sind, und weisen jeweils eine Bürstenbreite auf, die bevorzugt im Bereich von 1,8 mm bis 3,0 mm liegt. Der Kommutator 185 wird unten stehend in Bezug auf eine in Fig. 2 vergrößert dargestellte Draufsicht im Detail beschrieben. Es wird jedoch darauf hingewiesen, dass die Funktionsweise eines geeigneten Kommutators aus dem Stand der Technik hinreichend bekannt ist. Somit wird hier zwecks Knappheit der Beschreibung auf eine eingehende Beschreibung der Funktionsweise des Kommutators 185 verzichtet.

Der Kollektor 183 ist in einer in Richtung von Pfeilen 150 gesehenen, vergrößerten Draufsicht verdeutlicht und weist illustrativ eine Vielzahl von ringförmig angeordneten Lamellen 170, 171, 172, 173, 174, 175, 176, 177, 178, 179 auf, deren Außenumfang die Kollektorlauffläche 189 ausbilden. Die Anzahl der Lamellen 170, 171, 172, 173, 174, 175, 176, 177, 178, 179 ist gemäß einer Ausführungsform ungleich einem ganzzahligen Vielfachen von vier. Die Lamellen 170, 171, 172, 173, 174, 175, 176, 177, 178, 179 sind illustrativ an einem den Rotorkomponenten 182 zugeordneten Befestigungselement 190 befestigt. Dieses Befestigungselement 190 ist z. B. eine Rotorwelle 190, die mit dem Rotorkern 188 verbunden oder an diesen angeformt ist.

Der Rotorkern 188 weist beispielhaft eine Vielzahl von Polsegmenten auf, zwischen denen zugeordnete Nuten bzw. Schlitze zur Aufnahme einer zwecks Klarheit und Übersichtlichkeit der Abbildung nicht dargestellten Rotorwicklung ausgebildet sind. Illustrativ weist der Rotorkern 188 zehn Polsegmente 130, 131, 132, 133, 134, 135, 136, 137, 138, 139 auf, die jeweils einen Zahnabschnitt und einen zugeordneten Jochabschnitt haben. Z. B. hat das Polsegment 130 einen Zahnabschnitt 192 und einen Jochabschnitt 194. Der Rotorkern 188 ist somit zehnnutig ausgebildet und darüber hinaus gemäß einer Ausführungsform vierpolig am Stator 181 ausgestaltet.

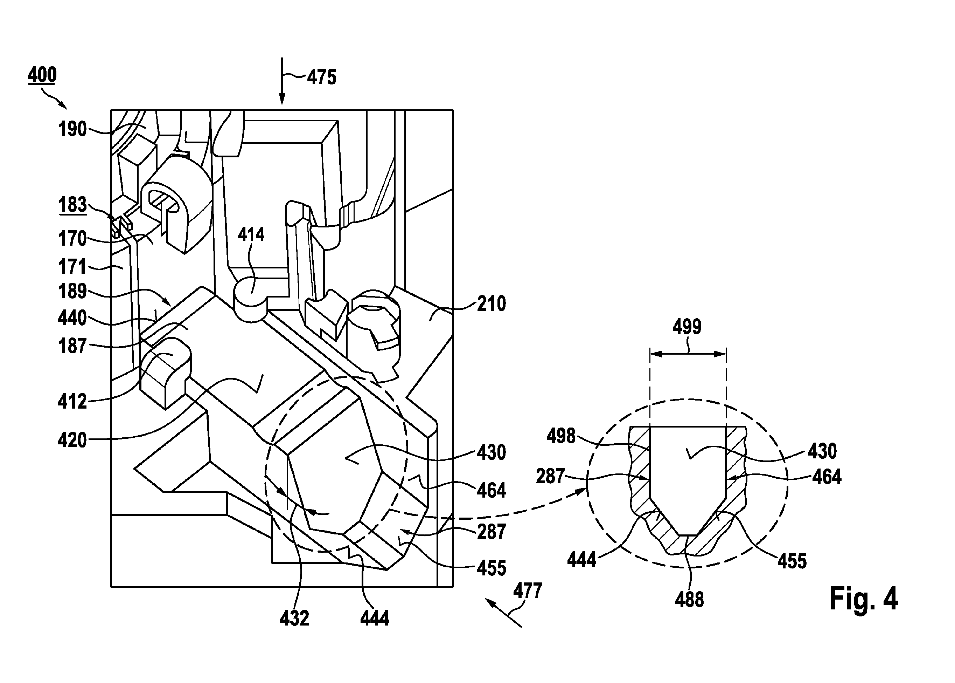

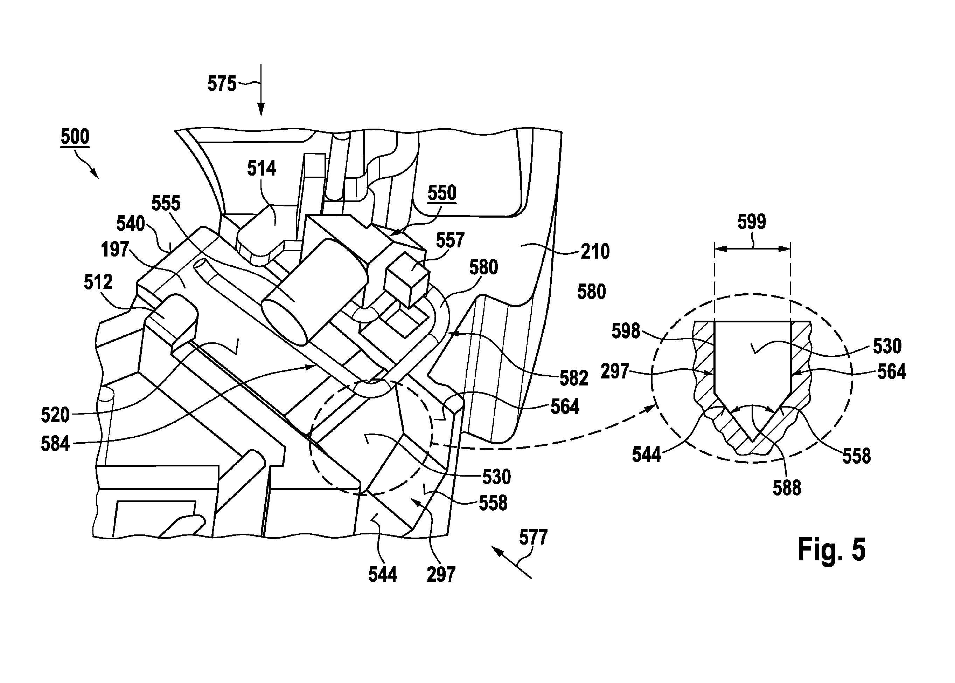

Fig. 2 zeigt eine Ansicht 200 des Kommutators 185 von Fig. 1 mit den an der Rotorwelle 190 befestigten Lamellen 170, 171, 172, 173, 174, 175, 176, 177, 178, 179 des Kollektors 183, die illustrativ durch eine in dem Spritzgussteil 210 vorgesehene Öffnung 250 durchgreifen. An dem Spritzgussteil 210 sind beispielhaft Bürstenhalter 287, 297 nach Art von Köchern zur Aufnahme und Führung der Kohlebürsten 187 bzw. 197 von Fig. 1 ausgebildet, um diese an der Kollektorlauffläche 189 in Schleifkontakt mit den Lamellen 170, 171, 172, 173, 174, 175, 176, 177, 178, 179 zu bringen. Zumindest einer der Bürstenhalter 287, 297 weist in Richtung seiner Längserstreckung bevorzugt einen mindestens fünfeckigen Querschnitt auf, wie unten bei Fig. 4 und 5 beschrieben.

Die Bürstenhalter 287, 297 sind bevorzugt SLC-(sensorless control)-fähig ausgebildet, um somit eine Sensorlose Steuerung des Kommutatormotors 100 von Fig. 1 zu ermöglichen. Hierzu sind die Bürstenhalter 287, 297 derart an dem Spritzgussteil 210 ausgebildet, dass diese eine Anordnung der Kohlebürsten 187, 197 in einem vorgegebenen Bürstenwinkel 250 zueinander ermöglichen. Dieser Bürstenwinkel 250 ist derart vorgegeben, dass er im Betrieb des Kommutatormotors 100 von Fig. 1 eine Entstehung von zur Positionserfassung bzw. zur Drehstellungserfassung eines durch die Rotorkomponenten 182 von Fig. 1 ausgebildeten Rotors geeigneten Kommutierungsstromrippeln ermöglicht.

Gemäß einer Ausführungsform liegt der vorgegebene Bürstenwinkel 250 in einem Winkelbereich, in dem der vorgegebene Bürstenwinkel 250 mit einer minimalen Abweichung zu 90° eine Erzeugung eines die geeigneten Kommutierungsstromrippel aufweisenden Stromrippelsignals ermöglicht. Dieser Winkelbereich ergibt sich aus der Formel 90° +/- (360°/2*N), wobei N die Anzahl der Nuten bzw. Schlitze des Rotorkerns 188 ist. Bei dem vierpoligen und zehnnutigen Kommutatormotor 100 von Fig. 1 mit N=10 ergibt sich der Winkelbereich dementsprechend zu 90° +/- 18° und läuft somit von 72° bis 108°.

Im Kontext der vorliegenden Erfindung ist ein Stromrippelsignal, das die geeigneten Kommutierungsstromrippel aufweist, ein im Betrieb des Kommutatormotors 100 von Fig. 1 mit dem vorgegebenen Kommutatordurchmesser bei dem vorgegebenen Bürstenwinkel 250 auftretendes Stromrippelsignal mit vergleichsweise großen Stromrippelamplituden. Diese großen Stromrippelamplituden sind zwar generell vorteilhaft für die Verwendbarkeit des Stromrippelsignals und die SLC-Fähigkeit der Bürstenhalter 287, 297, führen aber aufgrund einer zu deren Erzeugung erforderlichen Kraftaufwendung zu einer größeren Geräuschentwicklung, Leistungseinbußen und vermehrter Abstrahlung von elektromagnetischen Störstrahlungen. Deshalb wird als ein Stromrippelsignal, das die geeigneten Kommutierungsstromrippel aufweist, ausschließlich ein Stromrippelsignal mit nur geringfügigen Verschlechterungen hinsichtlich Geräuschentwicklung, Leistungseinbußen und Abstrahlung von elektromagnetischen Störstrahlungen im Vergleich zu einem bei einem Bürstenwinkel von 90° erzielbaren Stromrippelsignal betrachtet. Derartige Stromrippelsignale treten im Betrieb des Kommutatormotors 100 von Fig. 1 wie unten bei Fig. 3 beschrieben dann auf, wenn der vorgegebene Bürstenwinkel 250 nicht kleiner als 76° und nicht größer als 82° ist und bevorzugt 79° beträgt.

Das Spritzgussteil 210 wird z. B. durch Kunststoffspritzen hergestellt, wobei gemäß einer Ausführungsform ein sogenanntes Auf-Zu-Spritzgusswerkzeug, d. h. ein schieberloses Spritzgusswerkzeug, Anwendung findet. Hierbei sind die Bürstenhalter 287, 297 bevorzugt in einer Spritzgusswerkzeughälfte dargestellt, sodass diese dementsprechend durch Kunststoffspritzen unter Verwendung des schieberlosen Spritzgusswerkzeugs an dem Spritzgussteil 210 ausgebildet werden. Somit können die Bürstenhalter 287, 297 derart an dem Spritzgussteil 210 ausgebildet werden, dass ein maximaler Winkelversatz des vorgegebenen Bürstenwinkels 250 von weniger als 0,5° erreicht werden kann. Beispielhafte Bürstenhalter sind unten bei Fig. 4 und 5 beschrieben, wobei in Fig. 4 eine vergrößerte Abbildung eines Bereichs 400 und in Fig. 5 eine vergrößerte Abbildung eines Bereichs 500 von Fig. 2 gezeigt ist.

Gemäß einer Ausführungsform ist an dem Spritzgussteil 210 darüber hinaus ein Bereich 299 zur Aufnahme von elektronischen Bauteilen vorgesehen. Diese können z. B. eine Ausgleichsleiterwicklung ausbilden, die in Verbindung mit den Kohlebürsten 187, 197 steht. Eine beispielhafte Ausgleichswicklung ist in der DE 197 57 279 C1 beschrieben.

Fig. 3 zeigt ein Messdiagramm 300 mit drei beispielhaften Stromrippelsignalen 302, 304, 306, die im Betrieb des Kommutatormotors 100 von Fig. 1 mit einem beispielhaften Kommutatordurchmesser von 13 mm auftreten und bei denen jeweils erreichte Stromrippelamplituden 320 in Abhängigkeit von unterschiedlichen Bürstenwinkeln 310 abgebildet sind. Hierbei implementieren die unterschiedlichen Bürstenwinkel 310 jeweils den Bürstenwinkel 250 von Fig. 2. Das Stromrippelsignal 302 tritt beispielhaft bei einer Bürstenbreite von 3,0 mm auf, das Stromrippelsignal 304 bei einer Bürstenbreite von 2,25 mm und das Stromrippelsignal 306 bei einer Bürstenbreite von 1,5 mm auf. Mit 308 ist ein Ausschnitt eines Stromrippelsignals illustriert, das bei einer Bürstenbreite von 1,8 mm auftritt.

Wie aus Fig. 3 ersichtlich, treten im Betrieb des Kommutatormotors 100 von Fig. 1 in einem Bereich 330, in dem der Bürstenwinkel 310 nicht kleiner als 76° und nicht größer als 82° ist und die Bürstenbreite im Bereich von 1,8 mm bis 3,0 mm liegt, Stromrippelamplituden auf, die im Vergleich zu den bei 90° erzielten Stromrippelamplituden erhöht sind. Gleichzeitig konnte durch Messungen bestätigt werden, dass bei den Bürstenwinkeln 310 in diesem Bereich nur geringfügige Verschlechterungen hinsichtlich Geräuschentwicklung, Leistungseinbußen und Abstrahlung von elektromagnetischen Störstrahlungen im Vergleich zu dem bei dem Bürstenwinkel 310 von 90° erzielten Stromrippelsignal auftreten. Darüber hinaus geht aus diesen Messungen hervor, dass das Verhältnis zwischen den erzielten Stromrippelamplituden und den auftretenden Verschlechterungen bei dem Bürstenwinkel 310 von 79° besonders vorteilhaft ist.

Fig. 4 zeigt den Ausschnitt 400 von Fig. 2 mit der an dem Spritzgussteil 210 von Fig. 2 in dem Bürstenhalter 287 angeordneten Kohlebürste 187. Der z. B. nach Art einer Kulissenführung gemäß einer ersten Ausführungsform ausgebildete Bürstenhalter 287 weist in Richtung seiner Längserstreckung beispielhaft einen sechseckigen Querschnitt auf, mit parallel zueinander angeordneten Seitenwänden 464, 498, die jeweils abgeschrägte und aufeinander zulaufende Verlängerungen 455 bzw. 444 aufweisen, die über eine etwa rechtwinklig zu den Seitenwänden 464, 498 verlaufende Bodenwand 488 miteinander verbunden sind. In einem dem Kollektor 183 zugewandten Endbereich des Bürstenhalters 287 ist gemäß einer Ausführungsform mindestens ein Halteglied vorgesehen, das dazu ausgebildet ist, in diesem Endbereich ein Ausrutschen der Kohlebürste 187 in einer Richtung quer zur Richtung der Längserstreckung des Bürstenhalters 287 zu verhindern. Illustrativ sind zwei Halteglieder 412, 414 vorgesehen.

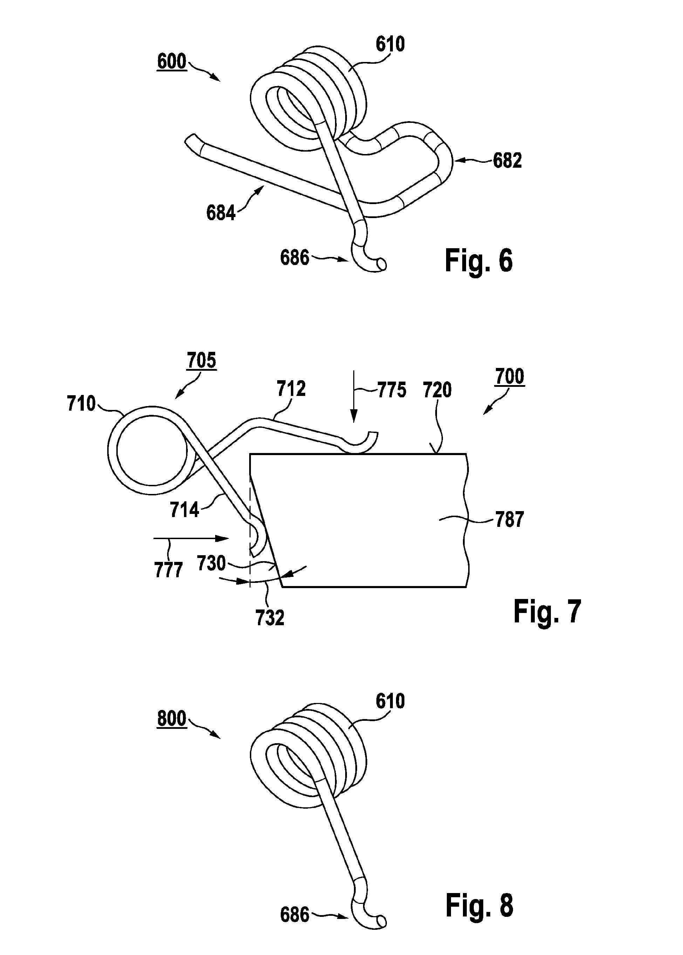

Die Kohlebürste 187 weist in Richtung ihrer Längserstreckung beispielhaft einen Querschnitt auf, der dem sechseckigen Querschnitt des Bürstenhalters 287 im Wesentlichen entspricht, um eine zumindest überwiegend spielfreie Führung der Kohlebürste 187 im Bürstenhalter 287 zu ermöglichen. An einer Vorderseite 440 der Kohlebürste 187 steht diese in Schleifkontakt mit der Kollektorlauffläche 189 der Lamellen 170, 171 des Kollektors 183 von Fig. 2. Hierzu kann die Kohlebürste 187 an einer vom Kollektor 183 abgewandten, der Vorderseite 440 gegenüber liegenden Rückseite 430 mit einer Kraft in Richtung des Kollektors 183, die mit einem Pfeil 477 angedeutet ist, beaufschlagt werden, wie unten bei Fig. 7 beschrieben. Darüber hinaus kann die Kohlebürste 187 an einer die Vorder- und Rückseite 440, 430 miteinander verbindenden Oberseite 420 mit einer Kraft in Richtung der Bodenwand 488 des Bürstenhalters 287 beaufschlagt werden, die mit einem Pfeil 475 angedeutet ist, wie unten bei Fig. 5 und 7 beschrieben. Somit kann in Verbindung mit den Haltegliedern 412, 414 ein Ausrutschen bzw. Verkippen der Kohlebürste 187 aus dem Bürstenhalter 287 verhindert werden. Die Oberseite 420 weist beispielhaft eine Breite 499 von 3,0 mm auf.

Gemäß einer Ausführungsform ist die Rückseite 430 der Kohlebürste 187 um einen vorgegebenen Winkel 432 von einer zur Oberseite 420 senkrecht verlaufenden Fläche abgewinkelt bzw. abgeschrägt. Somit kann eine in Richtung des Pfeils 477 wirkende Kraft zum Anpressen der Kohlebürste 187 gegen den Kollektor 183 auch eine Kraftkomponente zum Niederhalten der Kohlebürste 187 in dem Bürstenhalter 287 entwickeln.

Fig. 5 zeigt den Ausschnitt 500 von Fig. 2 mit der an dem Spritzgussteil 210 von Fig. 2 in dem Bürstenhalter 297 angeordneten Kohlebürste 197. Der z. B. nach Art einer Kulissenführung gemäß einer zweiten Ausführungsform ausgebildete Bürstenhalter 297 weist in Richtung seiner Längserstreckung beispielhaft einen fünfeckigen Querschnitt mit einer sogenannten Häuschenform auf. Diese Häuschenform besteht aus parallel zueinander angeordneten Seitenwänden 564, 598, die jeweils abgeschrägte und aufeinander zulaufende Verlängerungen 558 bzw. 544 aufweisen, die einen spitzen Winkel 588 ausbilden. In einem dem Kollektor 183 von Fig. 2 zugewandten Endbereich des Bürstenhalters 297 sind illustrativ zwei Halteglieder 512, 514 vorgesehen, um in diesem Endbereich ein Ausrutschen der Kohlebürste 197 in einer Richtung quer zur Richtung der Längserstreckung des Bürstenhalters 297 zu verhindern.

Die Kohlebürste 197 weist in Richtung ihrer Längserstreckung beispielhaft einen Querschnitt auf, der dem fünfeckigen Querschnitt des Bürstenhalters 297 im Wesentlichen entspricht, um eine zumindest überwiegend spielfreie Führung der Kohlebürste 197 im Bürstenhalter 297 zu ermöglichen. Hierbei ermöglicht die Ausbildung der Kohlebürste 197 in Häuschenform eine Darstellung eines verschleißnotwendigen Volumens am Kollektor 183 in Verbindung mit einer erforderlichen, vergleichsweise geringen Bürstenbreite 599, die beispielhaft 3,0 mm beträgt.

Eine Vorderseite 540 der Kohlebürste 197 ist dazu ausgebildet, einen Schleifkontakt mit der Kollektorlauffläche 189 des Kollektors 183 von Fig. 2 zu ermöglichen. Hierzu kann die Kohlebürste 197 an einer der Vorderseite 540 gegenüber liegenden Rückseite 530 mit einer Kraft in Richtung des Kollektors 183 von Fig. 2, die mit einem Pfeil 577 angedeutet ist, beaufschlagt werden, wie unten bei Fig. 7 beschrieben. Darüber hinaus kann die Kohlebürste 197 an einer die Vorder- und Rückseite 540, 530 miteinander verbindenden Oberseite 520 mit einer Kraft in Richtung des Bürstenhalters 297 beaufschlagt werden, die mit einem Pfeil 575 angedeutet ist, wie unten bei Fig. 7 beschrieben. Somit kann in Verbindung mit den Haltegliedern 512, 514 ein Ausrutschen bzw. Verkippen der Kohlebürste 197 aus dem Bürstenhalter 297 verhindert werden.

Gemäß einer Ausführungsform ist an dem Spritzgussteil 210 ein Befestigungselement 550 ausgebildet, das beispielhaft einen quer zur Längserstreckung des Bürstenhalters 297 verlaufenden Befestigungsbolzen 555 sowie ein Abstützglied 557 aufweist. An dem Befestigungsbolzen 555 ist illustrativ eine Anpressfeder 580 gemäß einer ersten Ausführungsform ausgebildet, die nachfolgend auch als "Kohleanpressfeder" bezeichnet wird. Diese dient zum Niederhalten der Kohlebürste 197 mit einer vorgegebenen Federkraft in dem Bürstenhalter 297.

Die Kohleanpressfeder 580 ist beispielhaft eine Schenkelfeder mit einem an einem Abstützbereich 582 ausgebildeten, z. B. angeformten Schenkel bzw. Federarm 584. Über den am Abstützglied 557 abgestützten Abstützbereich 582 wird der Federarm 584 in Richtung des Pfeils 575 auf die Kohlebürste 197 gedrückt und beaufschlagt diese somit in Richtung des Pfeils 575.

Fig. 6 zeigt eine bevorzugt als einstückige Schenkelfeder ausgebildete Kohleanpressfeder 600 gemäß einer zweiten Ausführungsform. Diese weist illustrativ einen Federkörper 610 mit einem daran vorgesehenen, z. B. angeformten ersten Schenkel bzw. Federarm 686 sowie einem Abstützbereich 682 auf, an dem ein zweiter Schenkel bzw. Federarm 684 ausgebildet bzw. angeformt ist.

Der erste Federarm 686 dient zur Beaufschlagung einer zugeordneten Kohlebürste (z. B. Kohlebürste 187 von Fig. 4) mit einer ersten vorgegebenen Federkraft bzw. Kohlevorschubkraft, z. B. in Richtung des Pfeils 477 und somit in Richtung des Kollektors 183 von Fig. 4, um dort einen erforderlichen Anpressdruck der Kohlebürste zu gewährleisten. Der zweite Federarm 684 dient zur Beaufschlagung der zugeordneten Kohlebürste (z. B. Kohlebürste 187 von Fig. 4) mit einer zweiten vorgegebenen Federkraft bzw. Kohleniederhaltekraft, z. B. in Richtung des Pfeils 475 und somit in Richtung des Bürstenhalters 287 von Fig. 4, um dort ein erforderliches Niederhalten der Kohlebürste zu gewährleisten.

Es wird darauf hingewiesen, dass die einstückige Ausgestaltung der Kohleanpressfeder 600 mit Funktionstrennung Kohlevorschubkraft-Kohleniederhaltekraft lediglich beispielhaften Charakter hat und nicht als Einschränkung der Erfindung zu verstehen ist. Diese kann vielmehr auch mehrteilig ausgeführt sein, wobei für jede Funktion ein oder mehrere zugeordnete Bauteile Anwendung finden können.

Fig. 7 zeigt eine Anordnung 700 mit einer bevorzugt als einstückige Schenkelfeder ausgebildeten Kohleanpressfeder 705 gemäß einer dritten Ausführungsform und einer illustrativen Kohlebürste 787. Diese weist beispielhaft eine Oberseite 720 und eine um einen vorgegebenen Winkel 732 abgewinkelte bzw. abgeschrägte Rückseite 730 auf.

Die Kohleanpressfeder 705 hat illustrativ einen Federkörper 710 mit einem daran vorgesehenen, z. B. angeformten ersten Schenkel bzw. Federarm 714 sowie einem daran vorgesehenen, z. B. angeformten zweiten Schenkel bzw. Federarm 712. Die Funktionsweise der Kohleanpressfeder 705 entspricht im Wesentlichen der Funktionsweise der Kohleanpressfeder 600 von Fig. 6, sodass hier zwecks Knappheit und Einfachheit der Beschreibung auf eine eingehende Beschreibung der Funktionsweise der Kohleanpressfeder 705 verzichtet wird.

Fig. 8 zeigt eine Kohleanpressfeder 800 gemäß einer vierten Ausführungsform. Diese besteht illustrativ aus dem Federkörper 610 und dem ersten Schenkel bzw. Federarm 686 der Kohleanpressfeder 600 von Fig. 6. Dementsprechend ist die Kohleanpressfeder 600 lediglich dazu ausgebildet, z. B. die Kohlebürste 187 von Fig. 4 mit einer ersten vorgegebenen Federkraft in Richtung des Pfeils 477 von Fig. 4 gegen den Kollektor 183 von Fig. 4 zu beaufschlagen.

Es wird darauf hingewiesen, dass zur stromripplefähigen Ausgestaltung des Kommutatormotors 100 von Fig. 1 mit einer Ausbildung SLC-fähiger Bürstenhalter gemäß einer Ausführungsform die oben bei Fig. 1 bis 8 beschriebenen Merkmale kombinierbar sind. Somit kann durch die Kombination dieser Merkmale in dem Kommutatormotor 100 von Fig. 1 die Erzeugung eines robusten und zuverlässigen Stromrippelsignals ermöglicht werden, das einerseits die geeigneten Kommutierungsstromrippel und andererseits nur geringfügige Verschlechterungen hinsichtlich Geräuschentwicklung, Leistungseinbußen und Abstrahlung von elektromagnetischen Störstrahlungen im Vergleich zu einem bei einem Bürstenwinkel von 90° erzielbaren Stromrippelsignal aufweist.

## Patentansprüche

1. Kommutatormotor (100) mit einem Kommutator (185), der einen an einer Kollektorlauffläche (189) in Schleifkontakt mit zugeordneten Bürsten (187, 197) stehenden Kollektor (183) aufweist, wobei die Bürsten (187, 197) in zugeordneten Bürstenhaltern (287, 297) angeordnet sind, **dadurch gekennzeichnet, dass** die Bürstenhalter (287, 297) dazu ausgebildet sind, eine Anordnung der Bürsten (187, 197) in einem aus einem Bereich von 72° bis 108° vorgegebenen Bürstenwinkel (250) zu ermöglichen.

2. Kommutatormotor nach Anspruch 1, **dadurch gekennzeichnet, dass** der Bürstenwinkel (250) nicht kleiner als 76° und nicht größer als 82° ist, und vorzugsweise etwa 79° beträgt, wobei insbesondere der Bürstenwinkel (250) vorgegeben ist, um eine Entstehung von zur Positionserfassung des Rotors (182) geeigneten Kommutierungsstromrippeln zu ermöglichen.

3. Kommutatormotor nach Anspruch 1 oder 2, **dadurch gekennzeichnet, dass** der Kommutator (185) einem Rotor (182) zugeordnet ist, der einen vierpoligen Statorkern (181) aufweist.

4. Kommutatormotor nach einem der vorhergehenden Ansprüche, **dadurch gekennzeichnet, dass** der Rotorkern (188) zehnnutig ausgebildet ist.

5. Kommutatormotor nach einem der vorhergehenden Ansprüche, **dadurch gekennzeichnet, dass** der Kollektor (183) eine Vielzahl von Lamellen (170, 171, 172, 173, 174, 175, 176, 177, 178, 179) aufweist, deren Anzahl ungleich einem ganzzahligen Vielfachen von 4 ist.

6. Kommutatormotor nach einem der vorhergehenden Ansprüche, **dadurch gekennzeichnet, dass** die Bürsten (187, 197) jeweils eine Bürstenbreite (499) aufweisen, die im Bereich von 1,8 mm bis 3,0 mm liegt - insbesondere in Umfangsrichtung des Kollektors (183).

7. Kommutatormotor nach einem der vorhergehenden Ansprüche, **dadurch gekennzeichnet, dass** die Bürstenhalter (287, 297) an einem zugeordneten Spritzgussteil (210) angespritzt sind.

8. Kommutatormotor nach einem der vorhergehenden Ansprüche, **dadurch gekennzeichnet, dass** mindestens ein Bürstenhalter (287, 297) bezüglich seiner Längserstreckung einen mindestens fünfeckigen Querschnitt aufweist, der vorzugsweise in Häuschenform ausgebildet ist.

9. Kommutatormotor nach einem der vorhergehenden Ansprüche, **dadurch gekennzeichnet, dass** an dem mindestens einen Bürstenhalter (287, 297) mindestens ein Halteglied (412, 414) vorgesehen ist, das dazu ausgebildet ist, ein Ausrutschen der zugeordneten Bürste (187, 197) in einer Richtung quer zur Richtung der Längserstreckung des Bürstenhalters (287, 297) zu verhindern.

10. Kommutatormotor nach einem der vorhergehenden Ansprüche, **dadurch gekennzeichnet, dass** dem mindestens einen Bürstenhalter (287, 297) mindestens eine Kohleanpressfeder (600) zur Beaufschlagung der zugeordneten Bürste (187, 197) mit einer ersten vorgegebenen Federkraft in radialer Richtung zu den Lamellen (170, 171, 172, 173, 174, 175, 176, 177, 178, 179) hin zu beaufschlagen.

11. Kommutatormotor nach einem der vorhergehenden Ansprüche, **dadurch gekennzeichnet, dass** die mindestens eine Kohleanpressfeder (600) zum Niederhalten der zugeordneten Bürste (187, 197) mit einer zweiten vorgegebenen Federkraft in dem mindestens einen Bürstenhalter (287, 297) ausgebildet ist.

12. Kommutatormotor nach einem der vorhergehenden Ansprüche, **dadurch gekennzeichnet, dass** mindestens einem Bürstenhalter (287, 297) mindestens eine einstückige Kohleanpressfeder (600) zugeordnet ist, die einen ersten Federarm (686) zur Beaufschlagung einer zugeordneten Bürste (187, 197) mit einer ersten vorgegebenen Federkraft radial in Richtung des Kollektors (183) und einen zweiten Federarm (684) zum Niederhalten der zugeordneten Bürste (187, 197) in dem mindestens einen Bürstenhalter (287, 297) mit einer zweiten vorgegebenen Federkraft quer zur Radialrichtung - insbesondere in Axialrichtung oder in Tangentialrichtung zum Kommutator (185) - aufweist.

13. Kommutatormotor nach einem der vorhergehenden Ansprüche, **dadurch gekennzeichnet, dass** die zugeordnete Bürste (787) einen um einen vorgegebenen Winkel (732) abgeschrägten Endbereich (730) aufweist, der von dem ersten Federarm (714) mit der ersten vorgegebenen Federkraft beaufschlagt ist.

14. Kommutatormotor nach einem der vorhergehenden Ansprüche, **dadurch gekennzeichnet, dass** mindestens eine der Bürsten (187, 197) kohlehaltiges Material aufweist.

15. Kommutatormotor nach einem der vorhergehenden Ansprüche, **dadurch gekennzeichnet, dass** die Bürstenhalter (287, 297) durch Kunststoffspritzen unter Verwendung eines schieberlosen Spritzgusswerkzeugs an einem Spritzgussteil (210) ausgebildet sind.
